Europäisches Patentamt

European Patent Office

Office européen des brevets

(11) Publication number: **0 158 858 B1**

# EUROPEAN PATENT SPECIFICATION

(45) Date of publication of patent specification: **16.10.91**

(21) Application number: **85103383.7**

(22) Date of filing: **21.07.81**

(51) Int. Cl.5: **B01J 21/20, C10L 10/00**

(60) Publication number of the earlier application in accordance with Art.76 EPC: **0 045 170**

(54) **A process for combusting sulfur-containing material, a hydrocarbon conversion process including such a combustion process in a catalyst regeneration step and a composition suitable for use as a catalyst in the hydrocarbon conversion process.**

(30) Priority: **29.07.80 US 173315**
**29.07.80 US 173320**

(43) Date of publication of application:
**23.10.85 Bulletin 85/43**

(45) Publication of the grant of the patent:
**16.10.91 Bulletin 91/42**

(84) Designated Contracting States:
**BE DE FR GB**

(56) References cited:
**GB-A- 2 023 639**
**US-A- 2 992 191**
**US-A- 3 791 992**
**US-A- 4 239 656**

(73) Proprietor: **Katalistiks International, Incorporated**
**39 Old Ridgebury Road**
**Danbury, Connecticut 06817-0001(US)**

(72) Inventor: **Yoo, Jin Sun**
**2315 Mast Court**
**Flossmoor Illinois 60422(US)**
Inventor: **Jaecker, John Alvin**
**2352 Clyde Terrace**
**Homewood Illinois 60430(US)**

(74) Representative: **Cropp, John Anthony David et al**
**MATHYS & SQUIRE 10 Fleet Street**
**London, EC4Y 1AY(GB)**

EP 0 158 858 B1

## Description

BACKGROUND OF THE INVENTION

The invention is concerned with the combusting of solid, sulfur-containing material in a manner to effect a reduction in the emission of sulfur oxides to the atmosphere.

US-A-2,992,191 describes a hydrodesulfurization process in which a sulfur-containing hydrocarbon feedstock is contacted with a calcined catalyst comprising a magnesium aluminate spinel base containing, as the catalytically active components, a metal of atomic number 27 or 28 and vanadium or a metal of Group VIa of the Periodic Table of atomic number 42 to 74. Catalyst regeneration is effected typically by exposing the spent catalyst to a stream of air at a temperature in the range of about 480 to 595°C (900 to 1100°F).

The present invention relates to the combustion of solid sulfur-containing material in the presence of a spinel-based composition which in one preferred embodiment may also contain at least one additional metal component capable of promoting the conversion of sulfur dioxide to sulfur trioxide.

In one specific embodiment the solid sulfur-containing material comprises spent catalyst from a hydrocarbon conversion process especially a catalytic cracking process. In another embodiment, the solid sulfur-containing material comprises sulfur-containing coal or combustible waste. In any event, the composition of the combustible material is different from that of the spinel-based composition.

Typically, catalytic cracking of hydrocarbons takes place in a reaction zone at hydrocarbon cracking conditions to produce at least one hydrocarbon product and to cause carbonaceous material (coke) to be deposited on the catalyst. Additionally, some sulfur, originally present in the feed hydrocarbons, may also be deposited, e.g., as a component of the coke, on the catalyst. It has been reported that approximately 50% of the feed sulfur is converted to $H_2S$ in the FCC reactor, 40% remains in the liquid products and about 4 to 10% is deposited on the catalyst. These amounts vary with the type of feed, rate of hydrocarbon recycle, steam stripping rate, the type of catalyst, reactor temperature, etc.

Sulfur-containing coke deposits tend to deactivate cracking catalyst. Cracking catalyst is advantageously continuously regenerated, by combustion with oxygen-containing gas in a regeneration zone, to low coke levels, typically below about 0.4% by weight, to perform satisfactorily when it is recycled to the reactor. In the regeneration zone, at least a portion or sulfur, along with carbon and hydrogen, which is deposited on the catalyst, is oxidized and leaves in the form of sulfur oxides ($SO_2$ and $SO_3$, hereinafter referred to as "SOx") along with substantial amounts of CO, $CO_2$ and $H_2O$.

A considerable amount of study and research effort has been directed to reducing oxide of sulfur emissions from various gaseous streams, including those from the stacks of the regenerators of FCC units. However, the results leave much to be desired. Many metallic compounds have been proposed as materials to pick up oxides of sulfur in FCC units (and other desulfurization applications) and a variety of supports, including particles of cracking catalysts and "inerts", have been suggested as carriers for active metallic reactants. Many of the proposed metallic reactants lose effectiveness when subjected to repeated cycling. Thus when Group II metal oxides are impregnated on FCC catalysts or various supports, the activity of the Group II metals is rapidly reduced under the influence of the cyclic conditions. Discrete alumina particles, when combined with silica-containing catalyst particles and subjected to steam at elevated temperatures, e.g., those present in FCC unit regererators, are of limited effectiveness in reducing SOx emissions. Incorporation of sufficient chromium on an alumina support to improve SOx sorption results in undesirably increased coke and gas production.

The present invention provides an improved process for reducing emissions of sulfur dioxides, and a composition suitable for use in the process.

Copending European patent application 81303336.2 (EP-A-0045170), from which this application is divided, discloses a composition of matter characterized in that it comprises, in intimate admixture, (a) solid particles capable of promoting hydrocarbon conversion at hydrocarbon conversion conditions, said solid particles including at least one crystalline aluminosilicate capable of promoting said hydrocarbon conversion, and (b) discrete entities having a composition different from said solid particles and comprising at least one metal-containing spinel which includes a first metal and a second metal having a valency higher than the valence of said first metal and said spinel having a surface area of 25 m.$^2$/g to 600 m.$^2$/g, said solid particles being present in a greater amount, by weight, than the discrete entities.

Said copending application also discloses a hydrocarbon conversion process for converting a sulfur-containing hydrocarbon feedstock which comprises (1) contacting said feedstock with solid particles capable of promoting the conversion of said feedstock at hydrocarbon conversion conditions in at least one reaction zone to produce at least one hydrocarbon product and to cause deactivating sulfur-containing carbonaceous material to be formed on said solid particles thereby forming deposit-containing particles; (2) contacting said deposit-containing particles with an oxygen-containing vaporous medium at conditions to combust at least a portion of said carbonaceous deposit material in at least one regeneration zone to thereby regenerate at least a portion of the hydrocarbon conversion catalytic activity of said solid particles and to form a regeneration zone flue gas containing sulfur trioxide; and (3) repeating steps (1) and (2) periodically, characterised in that there are used, in intimate admixture with said solid particles, discrete entities having a composition different from said solid particles and comprising at least one metal-containing spinel including a first metal and a second metal having a valency higher than the valence of said first metal and said spinel having a surface area in the range 25 m.$^2$/g to 600 m.$^2$/g, said discrete entities being present in an amount sufficient to reduce the amount of sulfur oxides in said flue gas.

According to the present invention, there is provided a process for combusting solid, sulfur-containing combustible material by contacting said material with gaseous oxygen in a combustion zone at combustion conditions to produce combustion products including at least one sulfur oxide at least a portion of which is sulfur trioxide, characterised in that said contacting is carried out in the presence of discrete particles having a composition comprising more than 50% by weight of metal-containing spinel, thereby reducing the amount of sulfur oxide emitted from said combustion zone, said metal-containing spinel including a first metal and a second metal having a valence higher than the valence of said first metal and said combustible material having a composition different from that of the spinel-containing discrete particles.

Preferably, the spinel comprises alkaline earth metal-containing spinel and it is then further preferred that the discrete particles further include a minor amount of at least one rare earth metal component, especially cerium.

It is further preferred that the spinel has a surface area in the range 25 m.$^2$/g to 600 m.$^2$/g.

Further according to the invention there is provided a composition of matter suitable for use in the above process, said composition comprising more than 50% by weight of at least one metal-containing spinel which includes a first metal and a second metal having a valence higher the valence of said first metal, said spinel having a surface area in the range of 25 m.$^2$/g to 600 m.$^2$/g, and said composition of matter also containing at least one rare earth metal component, which component forms less than 50% by weight of said composition.

In one preferred embodiment, the discrete particles also include a minor, catalytically effective amount of at least one crystalline aluminosilicate effective to promote hydrocarbon conversion, e.g. cracking, at hydrocarbon conversion conditions.

In one preferred embodiment, the particulate material further includes a minor amount of at least one additional metal, e.g. a Group VIII platinum group metal, component capable of promoting the oxidation of sulfur dioxide to sulfur trioxide at the conditions in the combustion zone.

The preferred platinum group metals are palladium and platinum, most preferably platinum.

Where it is applied to the regeneration of hydrocarbon conversion catalyst, the discrete particles may be used to advantage in conjunction with the catalyst and disposed in any conventional reactor-regenerator system, in ebullating catalyst bed systems, in systems which involve continuously conveying or circulating catalyst between reaction zone and regeneration zone and the like. Circulating catalyst systems are preferred. Typical of the circulating catalyst bed systems are the conventional moving bed and fluidized bed reactor-regenerator systems. Both of these circulating bed systems are conventionally used in hydrocarbon conversion, e.g. hydrocarbon cracking, operations with the fluidized catalyst bed reactor-regenerator systems being preferred.

Although the particles of the invention may be used in physical admixture with catalyst, in one embodiment the discrete particles are combined as part of the catalyst. That is, the discrete particles, e.g. comprising calcined microspheres containing metal-containing spinel, and preferably, at least one additional metal component, are combined with the catalyst particles, e.g. during the manufacture of the catalyst particles, to form combined particles which function as both the presently useful solid particles and catalyst. However the former preferably exists as a separate and distinct phase. One preferred method for providing the combined particles is to calcine the particles employed in this invention prior to incorporating them into the combined particles.

The form, i.e. particle size, of the present particles, as well as the combined particles, is not critical to the present invention and may vary depending, for example, on the type of reaction-regeneration system employed. Such particles may be formed into any desired shape such as pills, cakes, extrudates, powders, granules, spheres and the like, using conventional methods. With regard to fluidized catalyst bed systems, it is preferred that the major amount by weight of the particles have a diameter in the range of about 10 μm to about 250 μm, more preferably about 20 μm to about 150 μm.

Methods for preparing the combined solid particles-catalyst particles particulate bodies are conventional and well known in the art. Certain of these procedures are thoroughly described in US Patent 3,140,253 and US RE 27,639.

As indicated above, the discrete particles utilized in the present invention comprise a major amount of at least one metal-containing spinel, preferably alkaline earth metal-containing spinel, which contains a first metal and a second metal of higher valence than the first. In another aspect, the present discrete particles further comprise a minor amount of at least one additional metal, e.g. platinum group metal, component capable of promoting sulfur dioxide oxidation.

The spinel structure is based on a cubic close-packed array of oxide ions. Typically, the crystallographic unit cell of the spinel structure contains 32 oxygen atoms; one-eighth of the tetrahedral holes (of which there are two per anion) are occupied by divalent metal ion, and one-half of the octahedral holes (of which there are two per anion) are occupied by trivalent metal ions.

This typical spinel structure or a modification thereof is adaptable to many other mixed metal oxides of the type $M^{II}M_2^{III}O_4$ (e.g. $FeCr_2O_4$, $ZnAl_2O_4$ and $Co^{II}Co_2^{III}O_4$), by some of the type $M^{IV}M_2^{II}O_4$ (e.g. $TiZn_2O_4$, and $SnCo_2O_4$), and by some of the type $M_2^I M^{VI}O_4$ (e.g., $Na_2MoO_4$ and $Ag_2MoO_4$). This structure is often symbolized as $X[Y_2]O_4$, where square brackets enclose the ions in the octahedral interstices. An important variant is the inverse spinel structure, $Y[XY]O_4$, in which half of the Y ions are in tetrahedral interstices and the X ions are in octahedral ones along with the other half of the Y ions. The inverse spinel structure is intended to be included within the scope of the team "metal-containing spinel" as used herein. The inverse spinel structure occurs often when the X ions have a stronger preference for octahedral coordination than do the Y ions. All $M^{IV}M_2^{II}O_4$ are inverse, e.g., $Zn(ZnTi)O_4$, and many of the $M^{II}M_2^{III}O_4$ ones are also, e.g., $Fe^{III}(Co^{II}Fe^{III})O_4$, $NiAl_2O_4$, $Fe^{III}(Fe^{II}Fe^{III})O_4$ and $Fe(NiFe)O_4$. There are also many compounds with distorted spinel structures in which only a fraction of the X ions are in tetrahedral sites. This occurs when the preference of both X and Y ions for octahedral and tetrahedral sites do not differ markedly.

Further details on the spinel structure are described in the following references: "Modern Aspects of Inorganic Chemistry" by H. I. Emeleus and A. G. Sharpe (1973), pp. 57-58 and 512-513; "Structural Inorganic Chemistry", 3rd edition, (1962) by A. F. Wells, pp. 130, 487-490, 503 and 526; and "Advanced Inorganic Chemistry", 3rd edition, by F. A. Cotton and G. Wilkinson (1972), pp. 54-55.

Metal-containing spinels include the following: $MnAl_2O_4$, $FeAl_2O_4$, $CoAl_2O_4$, $NiAl_2O_4$, $ZnAl_2O_4$, $MgTiMgO_4$, $FeMgFeO_4$, $FeTiFeO_4$, $ZnSnZnO_4$, $GaMgGaO_4$, $InMgInO_4$, $BeLi_2F_4$, $SLi_2O_4$, $MoLi_2O_4$, $SnMg_2O_4$, $MgAl_2O_4$, $CuAl_2O_4$, $LiAl_5O_8$, $ZnK_2(CN)_4$, $CdX_2(CN)_4$, $HgK_2(CN)_4$, $ZnTi_2O_4$, $FeV_2O_4$, $MgCr_2O_4$, $MnCr_2O_4$, $FeCr_2O_4$, $CoCr_2O_4$, $NiCr_2O_4$, $ZnCr_2O_4$, $CdCr_2O_4$, $MnCr_2S_4$, $ZnCr_2S_4$, $CdCr_2S_4$, $TiMn_2O_4$, $MnFe_2O_4$, $FeFe_2O_4$, $CoFe_2O_4$, $NiFe_2O_4$; $CuFe_2O_4$, $ZnFe_2O_4$, $CdFe_2O_4$, $MgCo_2O_4$, $TiCo_2O_4$, $CoCo_2O_4$, $ZnCo_2O_4$, $SnCo_2O_4$, $CoCo_2S_4$, $CuCo_2S_4$, $GeNi_2O_4$, $NiNi_2S_4$, $ZnGa_2O_4$, $WAg_2O_4$, and $ZnSn_2O_4$.

As indicated by the $LiAl_5O_8$ compound referred to above, it is not necessary for the two metals in the spinel structure to be in the ratio 1:2. For example, in this spinel material they are in the atomic ratio of 1:5. In addition, an atomic ratio of the two metals other than that indicated by the classical stoichiometric formula is also possible, as is apparent from, for example, the publications "An Introduction of Crystal Chemistry", A.C. Evans - University Press Cambridge 1948, see page 209 and, especially, 210, and "Structural Inorganic Chemistry"', A.F. Wells, The Clarendon Press Oxford, 1945, see pages 332 to 337, especially the passages from line 3 of page 333 to the third line from the bottom of page 335.

The preferred metal-containing spinels for use in the present invention are alkaline earth metal spinels, in particular magnesium aluminate spinel. Lithium containing spinels, which may be produced using conventional techniques are also preferred for use With regard to magnesium aluminate spinel, there often are eight Mg atoms and sixteen Al atoms to place in a unit cell ($8MgAl_2O_4$). Other alkaline earth metal ions, such as calcium, strontium, barium and mixtures thereof, may replace all or a part of the magnesium ions. Similarly, other trivalent metal ions, such as iron, chromium, vanadium, manganese, gallium, boron, cobalt and mixtures thereof, may replace all or a part of the aluminum ions.

The metal-containing spinels useful in the present invention may be derived from conventional and well known sources. For example, these spinels may be naturally occurring or may be synthesized using techniques well known in the art. Thus, a detailed description of such techniques is not included herein. However, a brief description of the preparation of the most preferred spinel, i.e., magnesium aluminate spinel, is set forth below. Certain of the techniques described, e.g., drying and calcining, have applicability to other metal-containing spinels.

The magnesium aluminate spinel suitable for use in the present invention can be prepared, for example, according to the method disclosed in U.S. Patent No. 2,992,191. The spinel can be formed by reacting, in an aqueous medium, a water-soluble magnesium inorganic salt and a water-soluble aluminum salt in which the aluminum is present in the anion. Suitable salts are exemplified by the strongly acidic magnesium salts such as the chloride, nitrate or sulfate and the water soluble alkali metal aluminates. The magnesium and

EP 0 158 858 B1

aluminate salts are dissolved in an aqueous medium and a spinal precursor is precipitated through neutralization of the aluminate by the acidic magnesium salt. Excesses of acid salt or aluminate are preferably not employed, thus avoiding the precipitation of excess magnesia or alumina. Preferably, the precipitate is washed free of extraneous ions before being further processed.

The precipitate can be dried and calcined to yield the magnesium aluminate spinel. Drying and calcination may take place simultaneously. However, it is preferred that the drying take place at a temperature below which water of hydration is removed from the spinel precursor. Thus, this drying may occur at temperatures below about $260°C(500°F)$, preferably from about $104°C(220°F)$ to about $232°C$-$(450°F)$ Suitable calcination temperatures are exemplified by temperatures ranging from about $427°C$ $(800°F)$ to about $1093°C (2000°F)$ or more. Calcination of the spinel precursor may take place in a period of time of at least about one half hour and preferably in a period of time ranging from about 1 hour to about 10 hours.

Another process for producing the presently useful magnesium aluminate spinel is set forth in U.S. Patent 3,791,992. This process includes mixing a solution of a soluble acid salt of divalent magnesium with a solution of an alkali metal aluminate; separating and washing the resulting precipitate; exchanging the washed precipitate with a solution of an ammonium compound to decrease the alkali metal content; followed by washing, drying, forming and calcination steps. In general, as indicated previously, the metal-containing spinels useful in the present invention may be prepared by methods which are conventional and well known in the art.

The metal spinel-based composition may be formed into particles of any desired shape such as pills, cake, extrudates, powders, granules, spheres, and the like using conventional methods. The size selected for the particles can be dependent upon the intended environment in which the final discrete particles are to be used -- as, for example, whether in a fixed catalyst bed or circulating catalyst bed reaction system or whether as a separate particle or as part of a mass of combined particles.

Substantially non-interfering proportions of other well known refractory material, e.g. inorganic oxides such as silica, zirconia, thoria and the like, may be included in the present discrete particles. Free magnesia and/or alumina (i.e. apart from the alkaline earth metal containing spinel) also may be included in the discrete particles, e.g. using conventional techniques. For example, the discrete particles may include 0.1% to 25% by weight of free magnesia (calculated as $MgO$). By substantially "non-interfering" is meant amounts of other material which do not have a substantial deleterious effect on the catalyst system or hydrocarbon conversion process when the particles of the present invention are employed in the regeneration of spent hydrocarbon conversion catalyst. The inclusion of materials such as silica, zirconia, thoria and the like into the present discrete particles may act to improve one or more of the functions of the discrete particles.

The presently useful lithium-containing spinels, e.g. lithium aluminate spinel, preferably are associated with a minor amount of at least one rare earth metal component.

Cerium or other suitable rare earth or rare earth mixture may be associated with the spinel using any suitable technique or combination of techniques; for example, impregnation, coprecipitation, ion-exchange and the like, well known in the art, with impregnation being preferred. Impregnation may be carried out by contacting the spinel with a solution, preferably aqueous, of rare earth; for example, a solution containing cerium ions (preferably $Ce^{+3}$, $Ce^{+4}$ or mixtures thereof) or a mixture of rare earth cations containing a substantial amount (for example, at least 40%) of cerium ions. Water-soluble sources of rare earth include the nitrate and chloride. Solutions having a concentration of rare earth in the range of 3 to 30% by weight are preferred. Preferably, sufficient rare earth salt is added to incorporate 0.05 to 25% (weight), more preferably 0.1 to 15% rare earth, and still more preferably 1.0 to 15% rare earth, by weight, calculated as elemental metal, on the particles.

It may not be necessary to wash the spinel after certain soluble rare earth salts (such as nitrate or acetate) are added. After impregnation with rare earth salt, the spinel can be dried and calcined to decompose the salt, forming an oxide in the case of nitrate or acetate. Alternatively, the spinel, in the form of discrete particles, can be charged to a hydrocarbon conversion, e.g., cracking unit, with the rare earth in salt form. In this case a rare earth salt with a thermally decomposable anion can decompose to the oxide in the reactor and be available to associate with $SOx$ in the regenerator.

Especially good results were achieved using spinel containing discrete particles such that the concentration of rare earth metal, e.g., cerium, calculated as the metal, is in the range of 1 to 25%, more preferably 2% to 15%, by weight of the total discrete particles.

Where the present invention is applied to the regeneration of hydrocarbon conversion catalysts, the present discrete particles preferably further comprise a minor amount, effective to promote the desired hydrocarbon conversion, of at least one crystalline aluminosilicate, often referred to as zeolites or molecular

5

sieves, capable of promoting the desired hydrocarbon conversion. Preferably, such aluminosilicates comprise 1% to 30%, more preferably 1% to 10%, by weight of the discrete particles. The presence of such aluminosilicates in the present discrete particles acts to increase the overall catalytic activity of the catalyst-discrete particles mixture for promoting the desired hydrocarbon conversion.

The preparation of crystalline aluminosilicate-amorphous matrix catalytic materials is described in US patent 3,140,253 and US RE 27,639. Catalytically active crystalline aluminosilicates which are formed during and/or as part of the methods of manufacturing the discrete particles of this invention, and/or combined catalyst/discrete particle, are within the scope of the present invention.

As indicated above, in one preferred embodiment the presently useful particulate material also contains at least one additional metal, e.g. platinum group metal, component. These additional metal components are defined as being capable of promoting the oxidation of sulfur dioxide to sulfur trioxide at combustion conditions, e.g. the conditions present in the catalyst regenerator. Increased carbon monoxide oxidation may also be obtained by including at least one of the additional metal components. Such metal components are selected from the group consisting of Group IB, IIB, IVB, VIA, VIB, VIIA and VIII of the Periodic Table, the rare earth metals, vanadium, iron, tin and antimony and mixtures thereof and may be incorporated into the presently useful particulate material in any suitable manner. Many techniques for including the additional metal in the particulate material are conventional and well known in the art. The additional metal, e.g., platinum group metal, such as platinum, may exist within the particulate material at least in part as a compound such as an oxide, sulfide, halide and the like, or in the elemental state. Generally, the amount of the platinum group metal component present in the final discrete particles is small compared to the quantity of the spinel. The platinum group metal component preferably comprises from 0,05 parts-per-million (ppm) to 1%, more preferably 0.05 ppm. to 1,000 ppm., and still more preferably 0.5 ppm. to 500 ppm., by weight of the particles, calculated on an elemental basis. Excellent results are obtained when the discrete entities contain 50 ppm. to 200 ppm., and in particular 50 ppm. to 90 ppm., by weight of at least one platinum group metal component. The other additional metals may be included in the particulate material in an amount effective to promote the oxidation of at least a portion, preferably a major portion, of the sulfur dioxide present to sulfur trioxide at the conditions of combustion, e.g., conditions present in the catalyst regeneration zone of a hydrocarbon catalytic cracking unit, Preferably, the present discrete entities comprise a minor amount by weight of at least one additional metal component (calculated as elemental metal). Of course the amount of additional metal used will depend, for example, on the degree of sulfur dioxide oxidation desired and the effectiveness of the additional metal component to promote such oxidation.

As an alternative to inclusion in the discrete particles, separate particles comprising at least one additional metal component and porous inorganic oxide support, e.g. platinum on alumina, may be included along with the discrete particles to promote sulfur dioxide oxidation.

The additional metal, e.g. platinum group metal, component may be associated with the spinel based composition in any suitable manner, such as by the impregnation of the spinel at any stage in its preparation and either after or before calcination of the spinel based composition. As indicated previously, various procedures for incorporating the additional metal component or components into the particulate material are conventional and well known in the art. Preferably, the additional metal component is substantially uniformly disposed on the spinel of the present discrete particles. One preferred method for adding the platinum group metal to the spinel involves the utilization of a water soluble compound of the platinum group metal to impregnate the spinel. For example, platinum may be added to the spinel by comingling the spinel with an aqueous solution of chloroplatinic acid. Other water-soluble compounds of platinum may be employed as impregnation solutions, including, for example, ammonium chloroplatinate and platinum chloride.

Both inorganic and organic compounds of the platinum group metals are useful for incorporating the platinum group metal component into the present discrete particles. Platinum group metal compounds, such as chloroplatinic acid and palladium chloride are preferred.

Where the present invention is applied to the regeneration of hydrocarbon conversion catalyst, it may be desirable to be able to separate the discrete particles from the catalyst particles; for example, when it is desired to use the catalyst particles alone for hydrocarbon conversion or where it is desired to recover the discrete particles of this invention for other uses or, for example, for platinum group metal recovery. This can be conveniently accomplished by preparing the discrete particles of the invention in a manner such that they have a different size from the catalyst particles. The separation of the two kinds of particles can then be easily effected by screening or other means of size segregation.

As noted above, the discrete particles and hydrocarbon conversion catalyst particles of the invention can be employed in a mass of combined particulate bodies which function both as hydrocarbon conversion catalyst and as discrete particles. Such particulate bodies may be produced in any suitable manner, certain of which methods are conventional and known in the art.

Although this invention may be useful in the regeneration of hydrocarbon conversion catalyst in many hydrocarbon chemical conversions, it is particularly applicable to the regeneration of catalyst so employed in systems for the catalytic cracking of hydrocarbons. Such catalytic hydrocarbon cracking often involves converting, i.e., cracking, heavier or higher boiling hydrocarbons to gasoline and other lower boiling components, such as hexane, hexene, pentane, pentene, butane, butylene, propane, propylene, ethane, ethylene, methane and mixtures thereof. Often, the substantially hydrocarbon feedstock comprises a gas oil fraction, e.g., derived from petroleum, shale oil, tar sand oil, coal and the like. Such feedstock may comprise a mixture of straight run, e.g., virgin, gas oil. Such gas oil fractions often boil primarily in the range of about 204°C (400°F) to about 538°C (1000°F). The invention may also be applied to the cracking of other substantially hydrocarbon feedstocks, e.g., other high boiling or heavy fractions of petroleum, shale oil, tar sand oil, coal and the like.

Such substantially hydrocarbon feedstock often contains minor amounts of contaminants, e.g., sulfur, nitrogen and the like. In one aspect, the present invention involves converting a hydrocarbon feedstock containing sulfur and/or sulfur chemically combined with the molecules of hydrocarbon feedstock. The present invention is particularly useful when the amount of sulfur in such hydrocarbon feedstock is in the range of 0.01% to 5%, preferably 0.1% to 3%, by weight of the total feedstock.

Hydrocarbon cracking conditions are well known and often include temperatures in the range of about 454°C (850°F) to about 593°C (1100°C), preferably about 482°C (900°F) to about 566°C (1050°F) Other reaction conditions usually include pressures of up to about 100 psia(6.8 bar); catalyst to oil ratios of about 1 to 2 to about 25 to 1, preferably about 3 to 1 to about 15 to 1; and weight hourly space velocities (WHSV) of from about 3 to about 60. These hydrocarbon cracking conditions may be varied depending, for example, on the feedstock and solid particles or combined particles being used and the product or products wanted.

In addition, the catalytic hydrocarbon cracking system includes a regeneration zone for restoring the catalytic activity of the solid particles or combined particles of catalyst previously used to promote hydrocarbon cracking. Carbonaceous, in particular sulfur-containing carbonaceous, deposit-containing catalyst particles from the reaction zone are contacted with free oxygen-containing gas in the regeneration zone at conditions to restore or maintain the activity of the catalyst by removing, i.e., combusting, at least a portion of the carbonaceous material from the catalyst particles. When the carbonaceous deposit material contains sulfur, at least one sulfur-containing combustion product is produced in the regeneration zone and may leave the zone with the regenerator flue gas. The conditions at which such free oxygen-containing gas contacting takes place may vary, for example, over conventional ranges. The temperature in the catalyst regeneration zone of a hydrocarbon cracking system is often in the range of about 480°C to about 815°C (about 900°F to about 1500°F), preferably about 590°C to about 730°C (about 1100°F to about 1350°F), and more preferably about 590°C to about 705°C (about 1100°F to about 1300°F). Other conditions within such regeneration zone may include, for example, pressures up to about 6.8 bar a (about 100 psia.), average catalyst contact times within the range of about 3 minutes to about 120 minutes, preferably from about 3 minutes to about 75 minutes. Sufficient oxygen is preferably present in the regeneration zone to completely combust the carbon and hydrogen of the carbonaceous deposit material, for example, to carbon dioxide and water. The amount of carbonaceous material deposited on the catalyst in the reaction zone is preferably in the range of about 0.005% to about 15%, more preferably about 0.1% to about 5% by weight of the catalyst. The amount of carbonaceous material deposited on the catalyst in the reaction zone is preferably in the range of about 0.005% to about 15%, more preferably about 0.1% to about 10%, by weight of the catalyst. The amount of sulfur, if any, contained in the carbonaceous deposit material depends, for example, on the amount of sulfur in the hydrocarbon feedstock. This deposit material may contain about 0.01% to about 10% or more by weight of sulfur. At least a portion of the regenerated catalyst is often returned to the hydrocarbon cracking reaction zone.

While the above description relates primarily to the application of the present invention to the regeneration of hydrocarbon conversion catalysts and particularly hydrocarbon cracking catalysts, it may also be applied to the combustion of other sulfur-containing combustible materials e.g. as in fluid bed coal burning steam boilers and fluid sand bed waste combustors. The present discrete particles have sufficient strength to withstand the conditions in such combustion zones. In the coal fired boiler application, the discrete particles are added, either separately or with the sulfur-containing coal, to the combustion zone, e.g. boiler, where combustion takes place and at least some sulfur trioxide is formed. The discrete particles leave the combustion zone with the coal ash and can be separated from the ash, e.g. by screening, density separation, or other well known solids separation techniques. The flue gases leaving the combustion zone

7

have reduced amounts of sulfur oxide, e.g. relative to combustion in the absence of the discrete particles. The discrete particles from the combustion zone can then be subjected to a reducing environment, e.g. contacted with $H_2$, at conditions such that at least a portion of the sulfur associated with the discrete particles disassociates from the discrete particles, e.g. in the form of $H_2S$, and is removed for further processing, e.g. sulfur recovery. The discrete particles, after sulfur removal, may be recycled to the combustion zone, e.g. boiler.

Conditions within the boiler may be those typically used in fluid-bed coal burning boilers. The amount of discrete particles used is sufficient to reduce sulfur oxide emissions in the boiler flue gas, preferably by at least about 50% and more preferably by at least about 80%. Conditions within the reducing zone are such that at least a portion, preferably at least about 50% and more preferably at least about 80%, of the sulfur associated with the discrete particles is removed. For example, reducing conditions may include temperatures in the range of about 480°C to about 980°C (about 900°F to about 1800°F); pressures in the range of about 0.95 to about 6.8 bar a (about 14 to about 100 psia); and $H_2$ to associated sulfur mole ratio in the range of about 1 to about 10.

In the fluid sand bed waste combustion application, the fluid sand, e.g., which acts as a heat sink, may be combined with the discrete particles and circulated from the combustion zone to the reduction zone. Reduced emissions of sulfur oxide from the combustion zone are thus achieved.

Conditions in the combustion zone may be as typically employed in fluid sand bed waste combustors. The amount of discrete particles employed is sufficient to reduce sulfur oxide emissions in the combuster flue gases, preferably by at least about 50% and more preferably by at least about 80%. Conditions within the reducing zone are similar to those set forth above for the coal fired boiler application.

The following examples are provided to better illustrate the invention, without limitation, by presenting several specific embodiments of the process of the invention.

EXAMPLE I

This example illustrates the production of discrete particles useful in the present invention.

3.2kg (7.05 lb) sodium aluminate (analysed as 29.8 percent by weight $Na_2O$ and 44.85 percent by weight of $Al_2O_3$) was stirred with 3.6 litres (one gallon) deionised water to bring as much as possible into solution. This was filtered through cloth with a 254 mm (10") Buchner funnel. The filtered solution was diluted to 8 liters with deionised water.

3.61 kg (7.95 lb) $Mg(NO_3)_26H_2$) was dissolved on $4.55 \times 10^{-3}m^3$ (one gallon) deionized water, and 166 ml. of concentrated $HNO_3$ was added. The solution was diluted to 8 liters with deionized water.

The two final solutions were run simultaneously from burettes into 32 liters deionized water in a $136 \times 10^{-3}m^3$ (30 gallon) rubber lined drum. The mix was stirred vigorously during the addition. Addition of the $Mg(NO_3)_2$ solution required 36 minutes. 2760 ml. of the sodium aluminate solution was added during this period. The pH was held between 7.0 and 7.5. After addition of all the magnesium nitrate-containing solution, sodium aluminate solution was added to bring the pH to 8.5. After this, 1080 ml. of sodium aluminate solution remained and was discarded.

The mix was held overnight and then filtered with a plate-frame press. The cake was washed in the press with $500 \times 10^{-3}m^3$(110 gallons) deionized water. The cake was reslurried in $45.5 \times 10^{-3}m^3$ (10 gallons) deionized water. A solution of 26 grams $Mg(NO_3)_26H_2O$ in 203 ml. deionized water was added to the slurry. The slurry was filtered and washed as before. After a repeat of the slurry, filter, and wash, the cake was dried at about 121°C(250°F) in a forced air drying oven.

The dried product was then hammermilled, first on a 1.27mm (0.050") screen (U.S standard mesh), then the 0-60 mesh portion was hammermilled again, this time on the 0.25mm (0.010") screen. The desirable, fine material was then screened through a 60 mesh screen. The so-obtained product, magnesium aluminate spinel precursor, was then transferred into a 59 mm diameter quartz tube, where it was calcined, in a fluidized state, for 3 hours at 482°C (900°F) with an air flow rate of about 106 liters per hour to form magnesium aluminate spinel.

The resulting magnesium aluminate spinel particles are screened to produce final particles having diameters less than 100 μm.

EXAMPLE II

Example I is repeated except that final magnesium aluminate spinel particles are impregnated, using conventional techniques, with an aqueous solution of chloroplatinic acid. The resulting particles are dried and calcined and contain about 100 ppm. of platinum, by weight of the total platinum-containing particles, calculated as elemental platinum. The platinum is substantially uniformly distributed on the spinel-containing particles.

EXAMPLE III

Example I was repeated except that the calcined magnesium aluminate spinel was impregnated with cerium.

For cerium impregnation, 177g (0.39 lbs) cerium carbonate was slurried in 1820 mls. of water and mixed with 350 mls. of 70% nitric acid slowly to dissolve the carbonate. 1.7kg (3.75 lbs) of the calcined magnesium aluminate spinel were placed in a Pyrex® tray and impregnated with the cerium solution with hand mixing using rubber gloves. After the impregnation was complete, the mix was allowed to equilibrate overnight.

The impregnated product was dried under IR lamps and finally in a 127°C (260°F) oven overnight. The dried product was calcined in a fluidized state in a 59 mm. diameter quartz reactor, for three hours at 482°C (900°F) with an air flow rate of about 83 l/hr. The resulting magnesium aluminate spinel particles were screened to produce final particles having diameters less than 100 μm and these final particles contained 5% by weight of cerium, calculated as elemental cerium.

EXAMPLE IV

A quantity of solid particles of a commercially available hydrocarbon oracking catalyst containing about 6% by weight of crystalline aluminosilicate, about 54% by weight amorphous silica-alumina and 40% by weight alpha alumina, and having the sane approximate size as the final particles from Example I, is combined with the final particles of Example I so that a mixture of 5 parts by weight of discrete particles and 95 parts by weight of catalyst particles results. The catalytic activity of the catalyst particles is equilibrated by using same (prior to combining with the discrete particles) in commercial fluid bed catalytic cracking service.

The mixture of catalyst particles and particles of Example I is loaded to a conventional fluid bed catalytic cracking unit (FCCU) and used to crack a petroleum derived gas oil fraction, a combined fresh feed and recycle stream. The fresh gas oil fraction boils in the range of about 204°C (400°F.) to about 538°C (1000°F) and is substantially hydrocarbon in nature, containing minor amounts of sulfur and nitrogen as contaminants. Conventional hydrocarbon cracking and catalyst regeneration conditions are employed in the reaction zone and regeneration zone, respectively.

The weight ratio of particles to total (fresh plus recycle) hydrocarbon feed entering the reaction zone is about 6 to 1. Other conditions within the reaction zone include:

Temperature, °F.    930 (499°C)
Pressure, psia.    15 (1.02 bar)
WHSV    15

Such conditions result in about 70% by volume conversion of the gas oil feedstock to products boiling at 204°C (400°F) and below.

The particles from the reaction zone include about 0.8% by weight of carbonaceous deposit material which is at least partially combusted in the regeneration zone. This carbonaceous material also includes a minor amount of sulfur which forms $SO_3$ at the combustion conditions formed in the regeneration zone. Air, in an amount so that amount of oxygen in the regeneration zone is about 1.15 times the amount theoretically required to completely combust this deposit material, is heated to the desired temperature before being admitted to the regeneration zone. Conditions within the regeneration zone include:

Temperature, °F.    1100 (593°C)
Pressure, psia.    15 (1.02 bar)
Average Catalyst Residence Time, min.    30

After a period of time, the catalyst is shown to remain effective to promote hydrocarbon cracking in the reaction zone, and reduced emissions of sulfur (as sulfur oxides) from the flue gases of the regeneration zone are obtained (relative to processing in the absence of the final magnesium aluminate spinel-containing particles.)

EXAMPLE V

Example IV is repeated, except that the platinum-containing particles of Example II are used instead of the magnesium aluminate spinel particles of Example I. After a period of time, the catalyst is shown to remain effective to promote hydrocarbon cracking in the reaction zone and carbon monoxide and sulfur dioxide oxidation in the regeneration zone. In addition, reduced emissions of sulfur (as sulfur oxides) from the flue gases of the regeneration zone are obtained (relative to processing in the substantial absence of the platinum-containing particles).

EXAMPLE VI

Example IV is repeated except that the cerium-containing particles of Example III are used in place of the particles of Example I.

After a period of time, the catalyst is shown to remain effective to promote hydrocarbon cracking in the reaction zone, and reduced emissions of sulfur (as sulfur oxides) from the flue gases of the regeneration zone are obtained (relative to processing in the absence of the final magnesium aluminate spinel-containing particles.)

EXAMPLE VII

Examples I, II and III are repeated, except that the final magnesium aluminate spinel particles, the platinum-containing particles and the cerium-containing particles, respectively, each include about 7% by weight of a crystalline aluminosilicate known to be catalytically active to promote hydrocarbon cracking. The crystalline aluminosilicate is incorporated into the particles using conventional, well known techniques. The platinum, and particularly the cerium, components are included in the particles so that a substantial amount, e.g., greater than about 50%, of the platinum and cerium is associated with the magnesium aluminate spinel of the particles, rather than with the crystalline aluminosilicate. Cerium associated with the crystalline aluminosilicate is substantially less effective, e.g., in reducing SOx emissions, relative to cerium deposited on the magnesium aluminate spinel portion of the particles.

EXAMPLE VIII

Example IV is repeated three times except that the magnesium aluminate-containing spinel particles produced in Example VII are used in place of the particles of Example I. After a period of time in hydrocarbon cracking service, these catalyst mixtures are shown to be effective to promote hydrocarbon cracking and reduced sulfur emissions from the regeneration zone are obtained. In particular, it is found that the crystalline aluminosilicate present in the discrete particles improves the hydrocarbon cracking in the reaction zone beyond that occurring in a system with discrete particles containing substantially no zeolitic component.

EXAMPLE IX

A mass of combined particles is prepared as follows

The magnesium aluminate spinel-based discrete particles are prepared by forming an aqueous slurry of magnesium aluminate spinel precursor (produced as in Example I) so that the spinel concentration, calculated as $MgAl_2O_4$, is about 9% by weight. Sufficient crystalline aluminosilicate known to be effective to promote hydrocarbon cracking is added to the slurry so that the final magnesium aluminate spinel-based discrete particles contain, on a dry weight basis, about 10% of such crystalline aluminosilicate. This slurry is stirred for about 1 hour to insure uniformity and then spray dried at a temperature less than that required to eliminate a substantial portion of the water of hydration to form discrete particles. These discrete particles are calcined in an electric muffle furnace using a programmed timer to increase the temperature 149°C (300°F) per hour to 566°C (1050°F) and maintain this temperature for 3 hours. The discrete particles are impregnated with platinum and cerium as in Examples II and III. The final discrete particles contain about 7% by weight of cerium calculated as elemental cerium, and about 100 ppm. by weight of platinum. A major portion of the cerium and platinum is associated with the spinel, rather than the crystalline aluminosilicate.

Essentially all the calcined discrete particles have a maximum dimension of less than about 200 μm. The discrete entities larger than 60 μm are discarded.

The solid particles-binder material is prepared by adding 6000 parts by weight of a solution containing Philadelphia Quartz Company "E" brand sodium silicate solution diluted with an equal weight of water to 3000 parts by weight of dilute (density-1.234) $H_2SO_4$. After these two solutions are thoroughly mixed, 4000 parts by weight of a solution containing 1200 parts by weight of $Al_2(SO_4)_3 \cdot 18H_2O$ is added. Sufficient

crystalline aluminosilicate, known to be effective to promote hydrocarbon cracking, is added to the mixture so that the final solid particles-binder material contains, on a dry weight basis, about 10% of such crystalline aluminosilicate. The resulting mixture is let stand to gel. The resulting hydrogel is cut into about 19mm(3/4") cubes and covered with concentrated $NH_4OH$ diluted with an equal volume of water. This material is let stand overnight and has a final pH of 11. The material is then washed by percolation until free of $Na^+$ and $SO_4^=$ ion.

500 parts (on a dry weight basis) of the washed hydrogel and 80 parts (on a dry weight basis) of the remaining calcined discrete particles and 10,000 parts by weight of water are thoroughly mulled, ground and mixed with agitation. The resulting slurry is dried in a spray drier. This drier is equipped with a two-fluid nozzle system which uses air at about 1.36 bar guage (20 psig) to disperse the slurry into the drying chamber. The drying gas, i.e., flue gas from an inline burner, enters the drying chamber at about 399° C (750° F) and exits the chamber at a temperature which ranges from about 152° C (305° F) to 157° C (315° F.) This drying gas in introduced into the top of the drying chamber while the slurry is dispersed upward from near the bottom of the chamber. In this way, the material to be dried is exposed to both counter-current blow (during ascent from the nozzle system) and co-current flow (during gravity descent) relative to the downward drying gas flow. The resulting dried particles are calcined in a manner similar to the calcination of the spinel based discrete particles described above. The resulting combined particles are screened to provide particles properly sized for use in a fluidized catalytic bed reaction zone-regenerator hydrocarbon cracking system.

EXAMPLE X

Example IV is repeated except that the physical mixture of discrete particles and catalyst particles used in Example IV is replaced by the combined particles produced in Example IX. After a period of time, these combined particles are shown to remain effective to promote both hydrocarbon cracking in the reaction zone and to reduce the amount of sulfur atmospheric emissions in the regeneration zone flue gases.

EXAMPLE XI

Example I is repeated except that $Li(NO_3) \cdot 3H_2O$ is substituted for the $Mg(NO_3)_2 \cdot 6H_2O$. The resulting final lithium aluminate spinel particles have diameters less than 100$\mu$m.

EXAMPLE XII

The final particles of Example XI are impregnated, using conventional techniques with chloroplatinic acid. The resulting spinel-containing particles are dried and calcined and contain about 100 ppm. of platinum, by weight of the total platinum-containing particles, calculated as elemental platinum. The platinum is substantially uniformly distributed on the spinel-containing particles.

EXAMPLE XIII

The final particles of Example XI are impregnated, using conventional techniques, with cerium-using an aqueous cerium nitrate solution. The resulting spinel-containing particles are dried and calcined and contain about 10% by weight of cerium, calculated as elemental cerium.

EXAMPLES XIV to XVI

Example IV is repeated three times except that the final particles of Example I are replaced by the resulting spinel-containing particles of Examples XI, XII and XIII, respectively. In each instance, reduced emissions of sulfur (as sulfur oxides) from the flue gases of the regenerator zone is obtained.

EXAMPLES XVII to XXI

Particles having diameters of less than 100 $\mu$m of the following spinel materials are prepared using conventional techniques:

|      | Example | Spinel |
|------|---------|--------|
|      | XVII    | $FeAl_2O_4$ |
|      | XVIII   | $MnAl_2O_4$ |
|      | XIX     | $MgCr_2O_4$ |
|      | XX      | $Fe_2TiO_4$ |
|      | XXI     | $MgFe_2O_4$ |

EXAMPLES XXII to XXVI

Example IV is repeated five additional times except that the final particles of Example I are replaced by the spinel-containing particles of Examples XVII, XVIII, XIX, XX and XXI, respectively. In each instance, reduced emissions of sulfur (as sulfur oxides) from the flue gases of the regenerator zone is obtained.

EXAMPLES XXVII AND XXVIII

These examples illustrate certain of the surprising benefits of the present invention.

Two blends of particles were prepared for testing. The blends were as follows:

° Blend A - 5% by weight cerium impregnated magnesium aluminate spinel final particles produced as in Example I, plus 95% by weight of a conventional zeolite-containing hydrocarbon cracking catalyst which had been equilibrated in commercial fluid bed catalytic cracking service.

° Blend B - 5% by weight cerium impregnated gamma alumina particles containing 5% by weight of cerium, calculated as elemental cerium, and having a particle size in the range of 25 to 100 $\mu$m, plus 95% by weight of the same conventional zeolite-containing catalyst as to prepare blend A. Cerium-alumina particles are known to possess good initial sulfur oxide removal activity when used in fluid catalytic cracking service.

Both blends were tested to determine their ability to continue to remove sulfur oxides over a period of time. This test procedure was as follows: Step 1 involved an initial determination of the ability of the blend to remove sulfur oxides from regenerator flue gases. Step one was carried out in a fluid bed catalytic cracking pilot plant known to provide results which are correlatable to results obtained in commercial sized systems. The feedstock and conditions for step 1 were as follows:

° Feedstock - mid-continent gas oil containing 2.0% by weight sulfur
° Reactor temperature - 930° F.(499° C)
° Regenerator temperature - 1100° F. (593° C)
° Stripper temperature - 930° F. (499° C)
° Pressure - 15 psia. (1.02 bar)
° Approximate catalyst regeneration time - 30 minutes
° Approximate stripping time - 10 minutes
° Approximate reaction time - 1 minute
° Steam as inerts in reactor, 3 mole %.

Step 2 of the test procedure involved continuous and accelerated aging in a fluidized-bed reactor to simulate the type of aging which occurs in commercial fluid-bed catalytic cracking service. The feedstock and conditions utilized in step 2 were as follows:

° Feedstock - Gulf Coast gas oil containing 2.0% by weight sulfur
° Reactor temperature - 930° F. (499° C)
° Reactor pressure - 15 psia. (1.02 bar)
° Reaction residence time - 1 minute
° Reaction catalyst/oil weight ratio - 6
° Stripping temperature - 930° F. (499° C)
° Regenerator temperature - 1100° F. (593° C)
° Regenerator pressure - 15 psia. (1.02 bar)
° Catalyst regenerator residence time - 30

° Regenerator combustion air flow ratio - 20g. air/g. coke

Step 3 of the test procedure involved periodically repeating step 1 to determine how much of the blend's activity to remove sulfur oxide had been lost during the aging of step 2.

The amount of sulfur oxides emitted with the flue gases from the regeneration using the blend was used as the basis for determining the blend's ability (or activity) to remove such sulfur oxides.

Results of testing Blends A and B following the above procedures were as follows:

| Days Aged at Conditions[1] of Step 2 | % of Initial Activity to Remove Sulfur Oxide Retained | |
|---|---|---|
| | Blend A | Blend B |
| 0 | 100 | 100 |
| 2 | 93 | 43 |
| 4 | 89 | 18 |
| 6 | 81 | 8 |

[1] One day of aging at the condition of step 2 is more severe than the aging which would occur in commercial FCC service. Therefore, there is no direct one-on-one correlation between aging in these two aging modes.

These results indicate very clearly that the cerium-magnesium aluminate spinel particles of Blend A maintain sulfur oxide removal activity much longer than the cerium-alumina particles of Blend B. Relatively rapid loss of sulfur removal activity has been one of the major problems with prior art attempts, e.g., cerium on alumina particles, to reduce sulfur oxide emissions. Therefore, these results show that the present invention provides substantial and surprising advantages in reducing sulfur oxide emissions from combustion zones, e.g., regeneration zones of fluid bed hydrocarbon catalytic cracking units.

While this invention has been described with respect to various specific examples and embodiments, it is to be understood that the invention is not limited thereto and that it can be variously practiced within the scope of the following claims.

## Claims

1. A composition of matter characterised in that it comprises more than 50% by weight of at least one metal-containing spinel which includes a first metal and a second metal having a valence higher than the valence of said first metal, said spinel having a surface area in the range of 25 m.$^2$/g to 600 m.$^2$/g, and said composition of matter also containing at least one rare earth metal component, which component forms less than 50% by weight of said composition.

2. A composition as claimed in claim 1 characterised in that said composition comprises discrete particles having diameters in the range of 10 $\mu$m to 250 $\mu$m.

3. A composition as claimed in claim 1 or claim 2 characterised in that said spinel comprises at least 70% by weight of said composition.

4. A composition as claimed in any one of claims 1 to 3 characterised in that it further comprises a minor, catalytically effective, amount of at least one additional metal component capable of promoting the

EP 0 158 858 B1

conversion of sulfur dioxide to sulfur trioxide.

5. A composition as claimed in claim 4 characterised in that said additional metal component is at least one platinum group metal component.

6. A composition as claimed in any one of claims 1 to 5 characterised in that said spinel comprises alkaline earth metal-containing spinel.

7. A composition as claimed in claim 6 characterised in that said spinel contains magnesium and aluminum.

8. A composition as claimed in any one of claims 1 to 7 characterised in that said rare earth metal component is a cerium component.

9. A composition as claimed in any one of claims 1 to 8 characterised in that said rare earth metal component is present in an amount in the range of 1% to 25% by weight of the total composition.

10. A composition as claimed in any one of claims 1 to 9 characterised in that it further comprises 0.1% to 25% by weight of free magnesia, calculated as MgO.

11. A composition as claimed in any one of claims 1 to 6 characterised in that it further comprises a minor, catalytically effective, amount of at least one crystalline aluminosilicate capable of promoting hydrocarbon conversion at hydrocarbon conversion conditions.

12. A process for combusting solid, sulfur-containing combustible material by contacting said material with gaseous oxygen in a combustion zone at combustion conditions to produce combustion products including at least one sulfur oxide at least a portion of which is sulfur trioxide, characterised in that said contacting is carried out in the presence of discrete particles having a composition comprising more than 50% by weight of metal-containing spinel, thereby reducing the amount of sulfur oxide emitted from said combustion zone, said metal-containing spinel including a first metal and a second metal having a valence higher than the valence of said first metal and said combustible material having a composition different from that of the spinel-containing discrete particles.

13. A process as claimed in claim 12 characterised in that said spinel comprises alkaline earth metal-containing spinel.

14. A process as claimed in claim 12 or claim 13 characterised in that said discrete particles contain a major amount of said alkaline earth metal-containing spinel and a minor amount of at least one rare earth metal component.

15. A process as claimed in claim 14 characterised in that said composition is as defined in any one of claims 1 to 11.

**Revendications**

1. Composition, caractérisée en ce qu'elle comprend plus de 50 % en poids d'au moins un spinelle contenant des métaux, qui renferme un premier métal et un second métal de valence supérieure à celle du premier, ledit spinelle ayant une surface spécifique comprise dans l'intervalle de 25 $m^2/g$ à 600 $m^2/g$ et ladite composition contenant également au moins un composant métallique des terres rares, ce composant formant moins de 50 % en poids de ladite composition.

2. Composition suivant la revendication 1, caractérisée en ce qu'elle comprend des particules physiquement distinctes dont les diamètres se situent dans l'intervalle de 10 $\mu$m à 250 $\mu$m.

3. Composition suivant la revendication 1 ou la revendication 2, caractérisée en ce que le spinelle constitue au moins 70 % en poids de la composition.

4. Composition suivant l'une quelconque des revendications 1 à 3, caractérisée en ce qu'elle comprend

14

en outre une quantité secondaire, catalytiquement efficace, d'au moins un autre composant métallique capable de promouvoir la transformation de l'anhydride sulfureux en anhydride sulfurique.

5. Composition suivant la revendication 4, caractérisée en ce que le composant métallique additionnel est au moins un composant métallique du groupe du platine.

6. Composition suivant l'une quelconque des revendications 1 à 5, caractérisée en ce que le spinelle est constitué d'un spinelle contenant un métal alcalinoterreux.

7. Composition suivant la revendication 6, caractérisée en ce que le spinelle contient du magnésium et de l'aluminium.

8. Composition suivant l'une quelconque des revendications 1 à 7, caractérisée en ce que le composant métallique des terres rares est un composant contenant du cérium.

9. Composition suivant l'une quelconque des revendications 1 à 8, caractérisée en ce que le composant métallique des terres rares est présent en une quantité comprise dans l'intervalle de 1 à 25 % en poids de la composition totale.

10. composition suivant l'une quelconque des revendications 1 à 9, caractérisée en ce qu'elle comprend en outre 0,1 à 25 % en poids de magnésie libre, exprimé en MgO.

11. Composition suivant l'une quelconque des revendications 1 à 6, caractérisée en ce qu'elle comprend en outre une quantité secondaire, catalytiquement efficace, d'au moins un aluminosilicate cristallin capable de promouvoir la transformation d'hydrocarbures dans des conditions de transformation d'hydrocarbures.

12. Procédé de combustion d'une matière combustible solide contenant du soufre par mise en contact de ladite matière avec de l'oxygène gazeux dans une zone de combustion dans des conditions de combustion aptes à former des produits de combustion comprenant au moins un oxyde de soufre dont une partie au moins est constituée d'anhydride sulfurique, caractérisé en ce que la mise en contact est effectuée en présence de particules physiquement distinctes dont la composition comprend plus de 50 % en poids de spinelle contenant des métaux, afin de réduire la quantité d'oxyde de soufre émise de ladite zone de combustion, ledit spinelle contenant des métaux renfermant un premier métal et un second métal dont la valence est supérieure à celle du premier, et ladite matière combustible ayant une composition qui diffère de celle des particules physiquement distinctes contenant le spinelle.

13. Procédé suivant la revendication 12, caractérisé en ce que le spinelle comprend un spinelle qui contient un métal alcalino-terreux.

14. Procédé suivant la revendication 12 ou la revendication 13, caractérisé en ce que les particules physiquement distinctes contiennent une quantité dominante dudit spinelle contenant un métal alcalino-terreux et une quantité secondaire d'au moins un composant métallique des terres rares.

15. Procédé suivant la revendication 14, caractérisé en ce que ladite composition est telle que définie dans l'une quelconque des revendications 1 à 11.

**Patentansprüche**

1. Stoffzusammensetzung, dadurch gekennzeichnet, daß sie mehr als 50 Gew.% wenigstens eines metallhaltigen Spinells enthält enthaltend ein erstes Metall und ein zweites Metall, das eine höhere Valenz hat als die Valenz dieses ersten Metalls, wobei dieses Spinell eine Oberfläche im Bereich von 25 m²/g bis 600 m²/g hat und diese Stoffzusammensetzung ebenfalls wenigstens eine Seltenerdmetallkomponente enthält, wobei diese Komponente weniger als 50 Gew.% der Zusammensetzung ausmacht.

2. Zusammensetzung gemäß Anspruch 1, dadurch gekennzeichnet, daß diese Zusammensetzung diskrete Partikel mit Durchmessern im Bereich von 10 μm bis 250 μm enthält.

3. Zusammensetzung gemäß Anspruch 1 oder Anspruch 2, dadurch gekennzeichnet, daß der Spinell wenigstens 70 Gew.% dieser Zusammensetzung ausmacht.

4. Zusammensetzung nach einem der Ansprüche 1 bis 3, dadurch gekennzeichnet, daß sie weiter eine geringere katalytisch wirksame Menge wenigstens einer zusätzlichen Metallkomponente enthält, die in der Lage ist die Umwandlung von Schwefeldioxid in Schwefeltrioxid zu beschleunigen.

5. Zusammensetzung gemäß Anspruch 4, dadurch gekennzeichnet, daß diese zusätzliche Metallkomponente wenigstens eine Platinmetallkomponente ist.

6. Zusammensetzung gemäß einem der Ansprüche 1 bis 5, dadurch gekennzeichnet, daß der Spinell erdalkalimetallhaltigen Spinell enthält.

7. Zusammensetzung gemäß Anspruch 6, dadurch gekennzeichnet, daß der Spinell Magnesium und Aluminium enthält.

8. Zusammensetzung gemäß einem der Ansprüche 1 bis 7, dadurch gekennzeichnet, daß die Seltenerdmetallkomponente eine Cerkomponente ist.

9. Zusammensetzung gemäß einem der Ansprüche 1 bis 8, dadurch gekennzeichnet, daß die Seltenerdmetallkomponente in einer Menge im Bereich von 1 % bis 25 Gew.% der Gesamtzusammensetzung anwesend ist.

10. Zusammensetzung gemäß einem der Ansprüche 1 bis 9, dadurch gekennzeichnet, daß sie weiter 0,1 % bis 25 Gew.% freies Magnesium, berechnet als Magnesiumoxid, enthält.

11. Zusammensetzung gemäß einem der Ansprüche 1 bis 6, dadurch gekennzeichnet, daß sie weiter eine geringere katalytisch wirksame Menge wenigstens eines kristallinen Aluminosilikats enthält, das in der Lage ist, die Kohlenwasserstoffumwandlung unter Kohlenwasserstoffumwandlungsbedingungen zu beschleunigen.

12. Verfahren zur Verbrennung eines festen schwefelhaltigen brennbaren Materials durch in Kontakt bringen dieses Materials mit Sauerstoffgas in einer Verbrennungszone unter Verbrennungsbedingungen zur Erzeugung von Verbrennungsprodukten einschließlich wenigstens eines Schwefeloxids von dem wenigstens ein Teil Schwefeltrioxid ist, dadurch gekennzeichnet, daß dieses in Kontakt bringen in Gegenwart von diskreten Partikeln ausgeführt wird, die eine Zusammensetzung haben umfassend mehr als 50 Gew.% metallhaltigen Spinell, wobei der Anteil an Schwefeloxid, der aus dieser Verbrennungszone ausgestoßen wird, reduziert wird, wobei dieser metallhaltige Spinell ein erstes Metall enthält und ein zweites Metall mit einer höheren Valenz als die Valenz dieses ersten Metalls und wobei das brennbare Material eine Zusammensetzung aufweist, die anders ist als diejenige der diskreten spinellhaltigen Partikel.

13. Verfahren gemäß Anspruch 12, dadurch gekennzeichnet, daß der Spinell erdalkalimetallhaltigen Spinell enthält.

14. Verfahren nach Anspruch 12 oder Anspruch 13, dadurch gekennzeichnet, daß die diskreten Partikel eine größere Menge des erdalkalimetallhaltigen Spinells und eine geringere Menge wenigstens einer Seltenerdmetallkomponente enthalten.

15. Verfahren naoh Anspruch 14, dadurch gekennzeichnet, daß die Zusammensetzung der Definition eines der Ansprüche 1 bis 11 entspricht.